# EUROPEAN PATENT SPECIFICATION

(11) **EP 4 472 043 B1**
(45) Date of publication and mention of the grant of the patent: **22.04.2026**
(21) Application number: 22924063.5
(22) Date of filing: 18.11.2022
(51) Int. Cl.: H02K 15/04, H02K 15/085, H02K 15/0643, H02K 15/24

(54) **METHOD OF MANUFACTURING ARMATURE**
VERFAHREN ZUR HERSTELLUNG EINES ANKERS
PROCÉDÉ DE FABRICATION D'ARMATURE

(30) Priority: 25.01.2022 JP 2022009726
(43) Date of publication of application: 04.12.2024
(73) Proprietor: NHK Spring Co., Ltd., Kanagawa 236-0004 (JP)
(72) Inventor: KOBAYASHI, Dai, Yokohama-shi, Kanagawa 236-0004 (JP); HIROTA, Yuji, Yokohama-shi, Kanagawa 236-0004 (JP)
(74) Representative: DREISS Patentanwälte PartG mbB
(86) International application number: PCT/JP2022/042934
(87) International publication number: WO 2023/145211

(56) References cited:
- EP-A1- 3 700 070
- WO-A1-2019/093515
- JP-A- 2019 140 823
- JP-A- 2019 140 823
- JP-A- 2019 208 323
- JP-A- 2021 145 404
- JP-A- 2021 145 404
- US-A1- 2019 123 608

## Description

### Technical Field

The present disclosure relates to a method of manufacturing an armature.

### Background Art

Japanese Patent Application Laid-Open (JP-A) No. 2019-115139 discloses a coil bending device that bends segment coils of a stator. This coil bending device is a device that, at a stator core that has a yoke and plural teeth and at which slots are formed between the teeth that are adjacent in the peripheral direction, in a state in which respective lead portions of a segment coil, which is a U-shaped conductive wire including a bent portion and the two lead portions extending from the bent portion, are inserted in two of the slots, pushes and bends, toward the stator core side, the final ends of the lead portions that project out from an axial direction end surface of the stator core. This coil bending device has a coil bending member that pushes and bends the final ends of the lead portions, and a coil pressing mechanism that presses and fixes the segment coils, which are within the slots, from the radial direction inner side of the stator core toward the yoke. Due to the pressing and fixing by this coil pressing mechanism, the axial direction load that is applied at the time of bending the lead portions of the segment coil is prevented from being transmitted to the bent portion of the segment coil. A method of manufacturing an armature using a similar coil bending device is disclosed in EP 3 700 070 A1.

### SUMMARY OF INVENTION

### Technical Problem

In the above-described prior art, the segment coil is fixed by the frictional force that arises in the pressing by the coil pressing mechanism. If this frictional force is insufficient, at the time when the final ends of the lead portions (the leg portions) are bent in the radial direction of the stator core, there is the possibility that the positions of the segment coils will become offset in the axial direction of the stator core. Problems such as the following for example arise due to this positional offset. Namely, (1) the dimensions and shapes in the subsequent step and steps thereafter are affected. (2) The final ends of the leg portions of other segment coils move in the axial direction, and it becomes difficult to insert a tool between the layers. (3) The final ends of the segment coil leg portions that have been inserted into nearby slots move in the axial direction of the core due to the contact between the segment coils at the bent portion sides of the segment coils, and it becomes difficult to insert a tool between the layers.

In view of the above-described circumstances, an object of the present disclosure is to provide a method of manufacturing an armature that can effectively suppress positional offset of segment coils in the axial direction of the core at the time when the final ends of the segment coil leg portions are bent.

### Solution to Problem

A method of manufacturing an armature of a first aspect is a method of manufacturing an armature having a core in which a plurality of slots are formed, and a plurality of segment coils having both leg portions inserted in respective slots of the core and that are superposed in a plurality of layers in a radial direction of the core and are arrayed in annular forms, the method comprising: inserting the both leg portions of each of the plurality of segment coils into the respective slots of the core from an axial direction one side of the core; moving a tool that has at least one tooth by a robot manipulator in the radial direction and the axial direction, and inserting the at least one tooth between final ends of the respective layers; and, before inserting the at least one tooth between the final ends, inserting a restraining jig between bent portions of the segment coils of the respective layers and an end surface at the axial direction one side of the core.

In the method of manufacturing an armature of the first aspect, the armature that has a core in which a plurality of slots are formed, and a plurality of segment coils whose both leg portions are inserted in the respective slots of the core and that are superposed in a plurality of layers in the radial direction of the core and are arrayed in annular forms, is manufactured. In this manufacturing method, the both leg portions of the plurality of segment coils are respectively inserted into the respective slots of the core from an axial direction one side of the core. The amounts of projection of the final ends of the leg portions from the axial direction another side end surface of the core are set so as to become longer in a stepwise manner from the layer at the inner side toward the layer at the outer side of the plural layers. A tool that has at least one tooth is moved by a robot manipulator in the radial direction and the axial direction of the core, and the at least one tooth is inserted between the final ends of the segment coil leg portions of the respective layers. Due thereto, the final ends that are engaged with the at least one tooth are bent in predetermined shapes. Before the insertion of the at least one tooth between the final ends, the restraining jig is inserted between the bent portions of the segment coils of the respective layers and the end surface at the axial direction one side of the core. Due to this restraining jig abutting the bent portions of the segment coils of the respective layers from the axial direction another side of the core, movement of the segment coils in the axial direction of the core is restricted. Due thereto, at the time when the final ends of the segment coil leg portions are bent, positional offset of the segment coils in the axial direction of the core can be suppressed effectively.

In a method of manufacturing an armature of a second aspect, in the first aspect, two restraining portions that are lined-up in a peripheral direction of the core are provided at the restraining jig, one of the restraining portions is made to abut, from an axial direction other side, the bent portions of the segment coils whose leg portions at one side in the peripheral direction are inserted between the two restraining portions, and another of the restraining portions is made to abut, from the axial direction another side, the bent portions of the segment coils whose leg portions at other side in the peripheral direction are inserted between the two restraining portions.

In accordance with the method of manufacturing an armature of the second aspect, the two restraining portions that are lined-up in the peripheral direction of the core are provided at the restraining jig. One of the restraining portions abuts, from the axial direction another side of the core, the bent portions of the segment coils whose leg portions at the one side in the peripheral direction are inserted between the two restraining portions. The another of the restraining portions abuts, from the axial direction another side of the core, the bent portions of the segment coils whose leg portions at the another side in the peripheral direction are inserted between the two restraining portions. In this way, because the two restraining portions are provided at the one restraining jig, the structure can be simplified as compared with a case in which the two restraining portions are provided at separate restraining jigs.

In a method of manufacturing an armature of a third aspect, in the first aspect or the second aspect, before the at least one tooth is inserted between the final ends, roots of portions, which project out from an end surface at an axial direction other side, of the final ends of the respective layers are nipped by a clamp in the radial direction.

In the method of manufacturing an armature of the third aspect, before the at least one tooth of the tool is inserted between the final ends of the segment coil leg portions of the respective layers, the roots of portions, which project out from the end surface at the axial direction another side of the core, of the final ends of the respective layers are nipped by a clamp in the radial direction of the core. Due thereto, at the time when the final ends of the segment coil leg portions are bent, the effect of suppressing positional offset of the segment coils in the axial direction of the core can be improved.

### Advantageous Effects of Invention

As described above, in the method of manufacturing an armature relating to the present disclosure, at the time when the final ends of the segment coil leg portions are bent, positional offset of the segment coils in the axial direction of the core can be suppressed effectively.

### BRIEF DESCRIPTION OF DRAWINGS

Fig. 1 is a perspective view illustrating a state in the midst of manufacturing a stator by a method of manufacturing an armature relating to an embodiment.
Fig. 2A is a front view illustrating a segment coil.
Fig. 2B is a side view illustrating the segment coil.
Fig. 2C is a top view illustrating the segment coil.
Fig. 3 is a plan view for explaining a method of inserting segment coil leg portions into respective slots of a stator core.
Fig. 4 is a cross-sectional view for explaining a push-in step of segment coils.
Fig. 5 is a side view illustrating peripheral structures, including main portions of an interlayer interval widening device.
Fig. 6A is a plan view illustrating a restraining jig.
Fig. 6B is a side view illustrating the restraining jig.
Fig. 6C is an end view illustrating the restraining jig.
Fig. 7 is a side view illustrating a state in which restraining portions of the restraining jig are inserted between bent portions of the segment coils that are superposed in plural layers and an end surface of the stator core, and the leg portions of the segment coils that are superposed in plural layers are nipped by a clamp.
Fig. 8 is a side view in a state in which a portion of the structure illustrated in Fig. 7 is viewed from a different direction than in Fig. 7.
Fig. 9 is a side view illustrating a state in which distal ends of comb teeth are inserted between final ends of the segment coil leg portions of respective layers.
Fig. 10 is a side view illustrating a state in which the comb teeth are inserted between the final ends of the segment coil leg portions of the respective layers.
Fig. 11 is a side view illustrating a state in which the final ends of the segment coil leg portions of the layer at the outer side are bent by a pusher.
Fig. 12 is a side view illustrating a state in which the pusher has been moved apart from the final ends of the segment coil leg portions of the layer at the outer side.
Fig. 13 is an enlarged side view illustrating a state in which the comb teeth of a tool are pulled-out from between the final ends of the segment coil leg portions of the respective layers.

### DESCRIPTION OF EMBODIMENTS

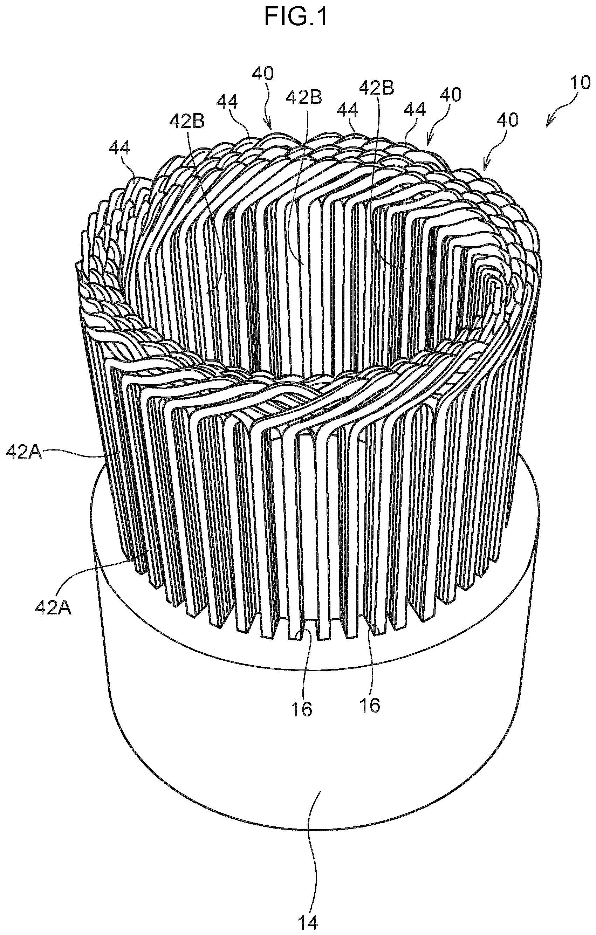

A method of manufacturing an armature relating to an embodiment of the present disclosure is described hereinafter with reference to Fig. 1 through Fig. 13. Note that, in the respective drawings, there are cases in which some of the reference numerals are omitted in order to make the drawings easier to understand. A state in the midst of manufacturing a stator 10, which is manufactured by the method of manufacturing an armature relating to the present embodiment, is illustrated in a perspective view in Fig. 1. This stator 10 (stator; armature) has a stator core 14 in which numerous slots 16 are formed, and numerous segment coils (rectangular wire coils) 40 whose both leg portions 42A, 42B are inserted in the respective slots 16 of the stator core 14 and that are superposed in plural layers in the radial direction of the stator core 14 and are arrayed in annular forms.

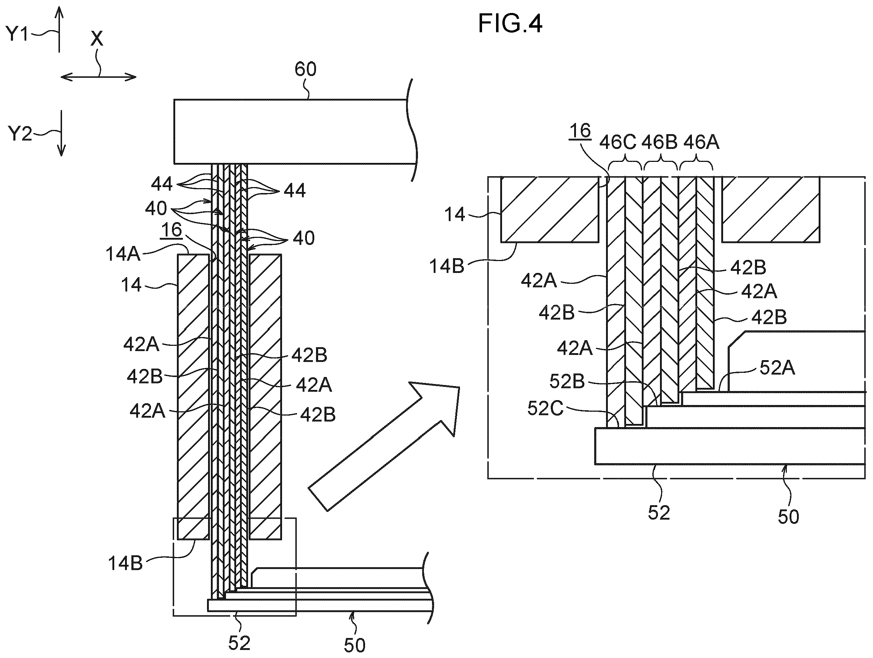

The stator core 14 corresponds to the "core" in the present disclosure. This stator core 14 is formed in the shape of a cylindrical tube by numerous electromagnetic steel plates being layered. The numerous slots 16 are formed in the inner peripheral portion of the stator core 14. At the numerous slots 16, the both sides in the axial direction of the stator core 14 and the inner sides in the radial direction are open. Note that, in Fig. 4, Fig. 5, and Fig. 7 through Fig. 13, arrow Y1, arrow Y2 and arrow X indicate an axial direction one side, an axial direction another side, and the radial direction of the stator core 14, respectively. Hereinafter, there are cases in which the axial direction of the stator core 14 is simply called the "axial direction", the radial direction of the stator core 14 is simply called the "radial direction", and the peripheral direction of the stator core 14 is simply called the "peripheral direction".

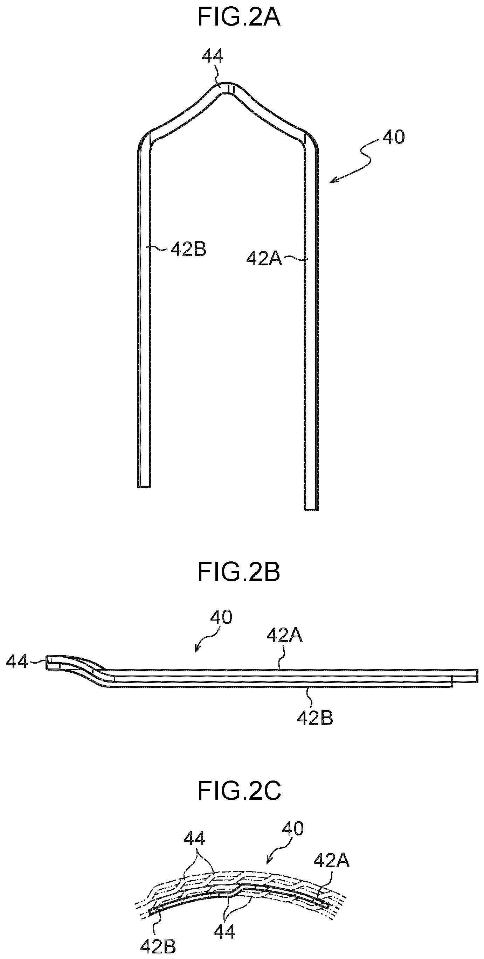

As illustrated in Fig. 2A through Fig. 2C, the segment coil 40 is a structure produced by a rectangular wire, which is formed of copper or the like and covered by an insulating film, being shaped into a U-shape, and is structured by the pair of leg portions 42A, 42B that extend parallel to one another, and a bent portion (turn portion) 44 that connects one end portions of the pair of leg portions 42A, 42B together. The leg portion 42A at one side in the peripheral direction is formed to be slightly longer in the axial direction than the leg portion 42B at the another side in the peripheral direction. Further, the insulating film is removed at the distal end portions of the respective leg portions 42A, 42B.

As illustrated in Fig. 2C, the central portion of the bent portion 44 is bent in the shape of a crank such that one end side of the bent portion 44 is disposed so as to be offset in the radial direction with respect to the another end side of the bent portion 44. The segment coil 40 is structured such that the positional relationship in the radial direction between the leg portion 42A and the leg portion 42B is changed due to this bent portion 44 being formed. Due thereto, the plural segment coils 40 are layered in the radial direction as illustrated by the two-dot chain lines in Fig. 2C.

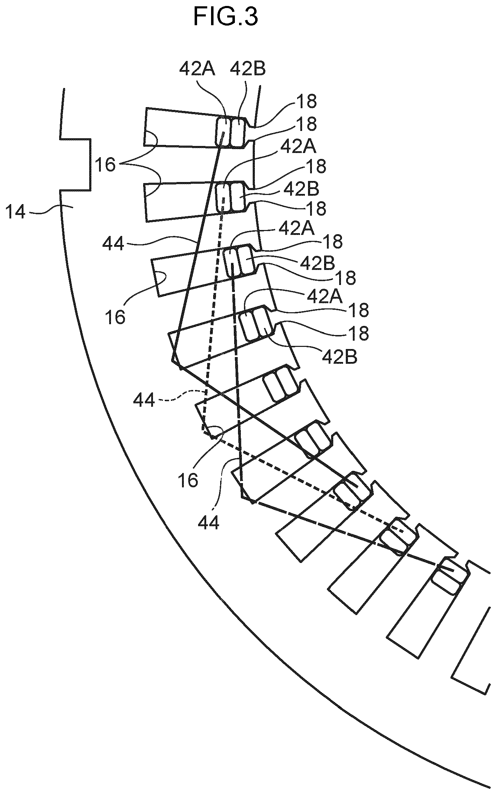

As illustrated in Fig. 1, at the numerous segment coils 40, the both leg portions 42A, 42B are respectively inserted into the respective slots 16 of the stator core 14 from an axial direction one side, and the segment coils 40 are superposed in plural layers in the radial direction of the stator coil 14 and are arrayed in annular forms. As illustrated in Fig. 3, one layer is formed by the segment coils 40 being successively inserted into the slots 16 one-by-one along the peripheral direction, once around the periphery. In the present embodiment, as illustrated in Fig. 4, three layers 46A, 46B, 46C of the segment coils 40 are formed. Note that, in the present embodiment, as an example, a stopper portion 18 (see Fig. 3), which prevents the segment coil 40 from falling out of the slot 16, is formed at the radial direction inner side end portion of each slot 16.

As illustrated in Fig. 4, in the present embodiment, the axial direction lengths of the leg portions 42A, 42B of the segment coils 40 are set so as to become longer in a stepwise manner from the layer 46A at the inner side toward the layer 46C at the outer side of the three layers 46A, 46B, 46C. Further, as illustrated in Fig. 3 and Fig. 4, within each of the slots 16, at each of the respective layers 46A, 46B, 46C, the leg portion 42A at one side of one of the segment coils 40 is superposed on the radial direction outer side of the leg portion 42B at the another side of another one of the segment coils 40.

Note that, in the inserting of the numerous segment coils 40 into the stator core 14, for example, a method can be employed in which, by setting the numerous segment coils 40 in an annular arraying jig, an assembly of the segment coils 40 that are arrayed in an annular form is formed, and each assembly is inserted one-by-one into the respective slots 16 of the stator core 14. Or, for example, a method may be employed in which the segment coils 40 are inserted one-by-one into the respective slots 16 of the stator core 14. When either of these methods is employed, the numerous segment coils 40 are only inserted midway into the respective slots 16 of the stator core 14. Therefore, after the numerous segment coils 40 are inserted into the respective slots 16 of the stator core 14, a push-in step of pushing the numerous segment coils 40 further into the stator core 14 is carried out.

In the present embodiment, the push-in step of the numerous segment coils 40 is carried out by using a first jig 50 and a second jig 60 illustrated in Fig. 4. Due to this push-in step, the numerous segment coils 40 are pushed into the stator core 14 up to set positions. When this push-in step is carried out, the amounts of projection of the final ends of the leg portions 42A, 42B from an end surface 14A at the axial direction another side of the stator core 14 become longer in a stepwise manner from the layer 46A at the inner side toward the layer 46C at the outer side of the plural layers 46A, 46B, 46C. Note that, in the following explanation, there are cases in which the leg portions 42A, 42B of the segment coils 40 are simply called the "leg portions 42".

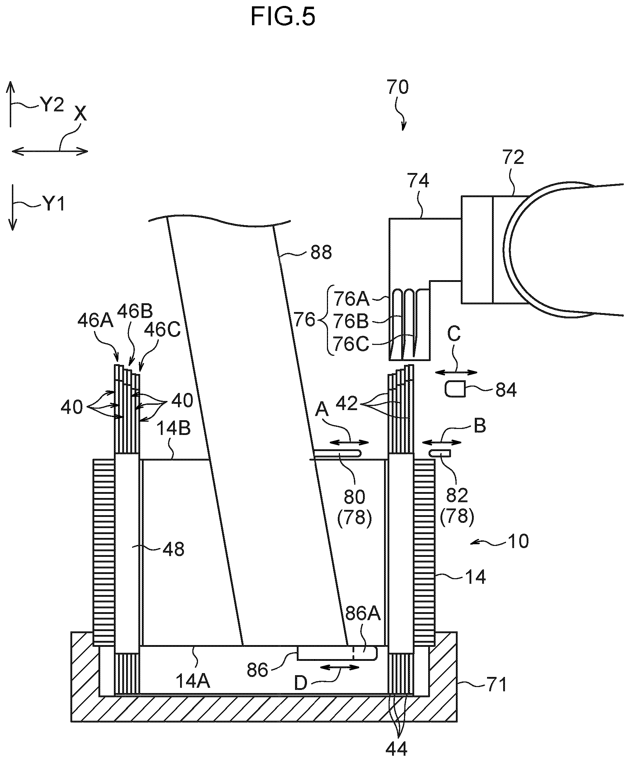

When the above-described push-in step is completed, the method moves onto an interlayer interval widening step that is the next step. In the interlayer interval widening step, as illustrated in Fig. 5, the stator 10 after the push-in step is placed on a turntable 71 in a posture in which the final ends of the leg portions 42 of the plural segment coils 40 are facing upward. Note that the bent portions 44 of the plural segment coils 40 are illustrated schematically in Fig. 5. The aforementioned turntable 71 structures a portion of an interlayer interval widening device 70 that is illustrated in Fig. 5.

In the interlayer interval widening step, the intervals in the radial direction between the final ends of the leg portions 42 of the respective layers 46A, 46B, 46C (hereinafter simply called "the intervals between the final ends") are widened by using the above-described interlayer interval widening device 70. This widening of the intervals is, as an example, carried out successively per one slot 16. Due to this widening of the intervals, the plural (here, six) leg portions 42 that are inserted in the same slot 16 are moved apart from one another per pair 42A, 42B of each of the layers 46A, 46B, 46C. Due thereto, in a twisting step that is executed after the interlayer interval widening step, alignment of the final ends of the leg portions 42 with respect to the twisting tool is easy, and the work efficiency in the twisting step improves. Note that, in Fig. 5, 48 is an insulating paper (not illustrated in Fig. 1, Fig. 3 and Fig. 4) for insulating the leg portions 42 of the segment coils 40 from the stator core 14.

The above-described interlayer interval widening device 70 is structured to include a robot manipulator 72, a tool 74, a clamp 78, a pusher 84, and a restraining jig 86. The robot manipulator 72 structures, for example, the main body portion of a vertical articulated robot of six axes, and the operations thereof are controlled by an unillustrated controller. Note that, in Fig. 5, theta indicates the angle of rotation around the fifth axis of the robot manipulator 72. This fifth axis corresponds to the "wrist bending axis" in the present disclosure.

The tool 74 is an end effector that is mounted to the distal end of the robot manipulator 72, and is formed of metal for example. This tool 74 has comb teeth 76 that are formed in the shapes of teeth of a comb. The comb teeth 76 have plural (here, three) teeth 76A, 76B, 76C that are lined-up at an interval in the axial direction of the sixth axis of the robot manipulator 72. The three teeth 76A, 76B, 76C are formed in the shapes of plates whose plate thickness directions are the axial direction of the aforementioned sixth axis and whose length directions are the radial direction of the aforementioned sixth axis, and the distal ends thereof are pointed in the forms of single-edge blades. The tool 74 is disposed above the stator 10 in a posture in which the three teeth 76A, 76B, 76C extend downward and the direction in which the three teeth 76A, 76B, 76C are lined-up is the same direction as the radial direction. In this state, the three teeth 76A, 76B, 76C are in postures in which the surfaces thereof that are inclined in the forms of single-edge blades face the radial direction outer side. Note that it suffices for the tool 74 to have at least one tooth.

The clamp 78 has an inner radial side coil presser 80 and an outer radial side coil presser 82. The inner radial side coil presser 80 and the outer radial side coil presser 82 are, for example, formed in the shapes of plates and of metal, and are disposed with the vertical direction being the plate thickness directions thereof. The inner radial side coil presser 80 is disposed at the inner side, in the radial direction of the stator core 14, of the roots of the portions, which project-out from an end surface 14B at the axial direction another side of the stator core 14, of the final ends of the leg portions 42A of the layer 46A at the inner side. This inner radial side coil presser 80 is mounted to a moving body 88 that is moved in the radial direction by an unillustrated actuator. The moving body 88 is formed in the shape of an elongated plate whose length direction is substantially the vertical direction, and the lower portion side of the moving body 88 is inserted in the inner side of the stator core 14. The inner radial side coil presser 80 that is mounted to the vertical direction intermediate portion of the moving body 88 is moved in the radial direction together with the moving body 88 (refer to arrow A in Fig. 5). The outer radial side coil presser 82 is disposed at the outer side, in the radial direction of the stator core 14, of the roots of the portions, which project-out from the end surface 14B at the axial direction another side of the stator core 14, of the final ends of the leg portions 42B of the layer 46C at the outer side. This outer radial side coil presser 82 is moved in the radial direction by an unillustrated actuator (refer to arrow B in Fig. 5). The roots of the portions, which project-out from the end surface 14B, of the final ends of the leg portions 42 of the respective layers 46A, 46B, 46C can be nipped in the radial direction by the inner radial side coil presser 80 and the outer radial side coil presser 82.

The pusher 84 is, for example, formed in the shape of a block and of resin, and is disposed at the outer side, in the radial direction of the stator core 14, of the distal end portions of the portions, which project-out from the end surface 14B at the axial direction another side of the stator core 14, of the final ends of the leg portions 42B of the layer 46C at the outer side. The pusher 84 is moved in the radial direction by an unillustrated actuator (refer to arrow C in Fig. 5). The final ends of the leg portions 42 of the layer 46C at the outer side can be pushed toward the radial direction inner side by this pusher 84.

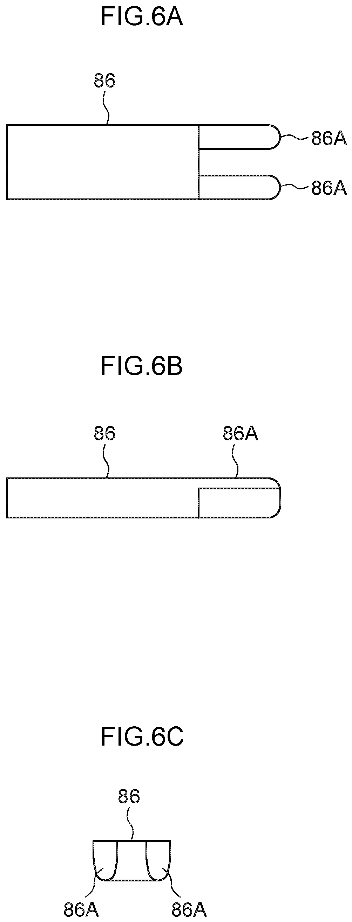

The restraining jig 86 is mounted to the lower end of the moving body 88 at further toward the lower side than the inner radial side coil presser 80. The restraining jig 86 is formed in the shape of an elongated plate and of metal for example, and is disposed with the vertical direction being the plate thickness direction thereof. This restraining jig 86 is disposed with the radial direction of the stator core 14 being the length direction thereof. As illustrated in Fig. 6A through Fig. 6C, plural (here, two) restraining portions 86A are provided at a length direction one end portion of the restraining jig 86. The two restraining portions 86A are lined-up with an interval therebetween in the width direction of the restraining jig 86, and are formed in elongated shapes that are long in the length direction of the restraining jig 86. The interval between the two restraining portions 86A is set so as to be equal to the width dimensions of the leg portions 42A, 42B of the segment coils 40, or so as to be slightly wider than this width dimension. At each of the restraining portions 86A, the top surface is formed in the shape of a flat surface, and the bottom surface and the distal end surface are formed in shapes of curved surfaces. This restraining jig 86 is disposed such that the top surfaces of the respective restraining portions 86A are positioned at the same height as the end surface 14A at the axial direction one side of the stator core 14, or slightly further toward the lower side than this end surface 14A. The restraining jig 86 is moved in the radial direction together with the moving body 88 (refer to arrow D in Fig. 5).

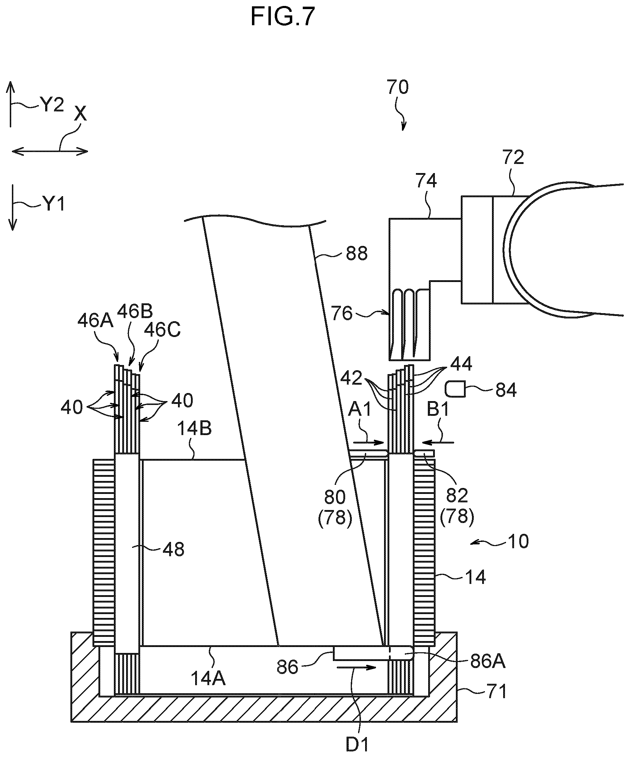

The interlayer interval widening device 70 of the above-described structure carries out an interlayer interval widening step due to operations of the above-described robot manipulator 72, turntable 71, and respective actuators being controlled by an unillustrated controller. In this interlayer interval widening step, first, as illustrated in Fig. 7, the inner radial side coil presser 80 is moved toward the radial direction outer side together with the moving body 88, and the outer radial side coil presser 82 is moved toward the radial direction inner side, and the roots of the portions, which project-out from the end surface 14B that is at the axial direction another side of the stator core 14, of the final ends of the leg portions 42 of the respective layers 46A, 46B, 46C are nipped in the radial direction by the clamp 78 (refer to arrow A1 and arrow B1 in Fig. 7). The final ends of the leg portions 42 of the respective layers 46A, 46B, 46C are thereby positioned in the radial direction, the insulating paper 48 is protected, the point of origin of the bending of the leg portions 42 of the respective layers 46A, 46B, 46C is generated, and axial direction movement of the leg portions 42 of the respective layers 46A, 46B, 46C is restricted.

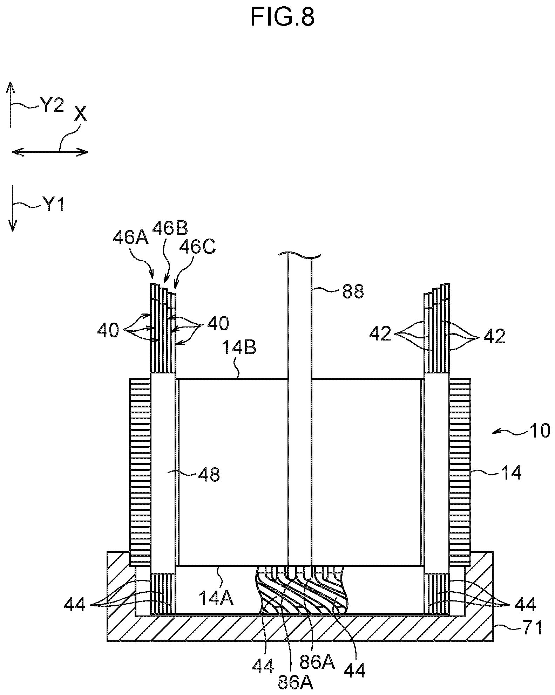

Further, when the moving body 88 is moved toward the radial direction outer side as described above, as illustrated in Fig. 7 and Fig. 8, the two restraining portions 86A of the restraining jig 86 that is mounted to the lower end of the moving body 88 are inserted between the bent portions 44 of the segment coils 40 of the respective layers 46A, 46B, 46C and the end surface 14A at the axial direction one side of the stator core 14. The leg portions 42A, 42B of the segment coils 40 of the respective layers 46A, 46B, 46C are inserted between the two restraining portions 86A. The two restraining portions that are lined-up in the peripheral direction of the core are provided at the restraining jig. The one restraining portion 86A abuts, from the axial direction another side (the upper side), the bent portions 44 of the segment coils 40 whose leg portions 42A at the one side in the peripheral direction are inserted between the two restraining portions 86A. The other restraining portion 86A abuts, from the axial direction another side (the upper side), the bent portions 44 of the segment coils 40 whose leg portions 42B at the another side in the peripheral direction are inserted between the two restraining portions 86A.

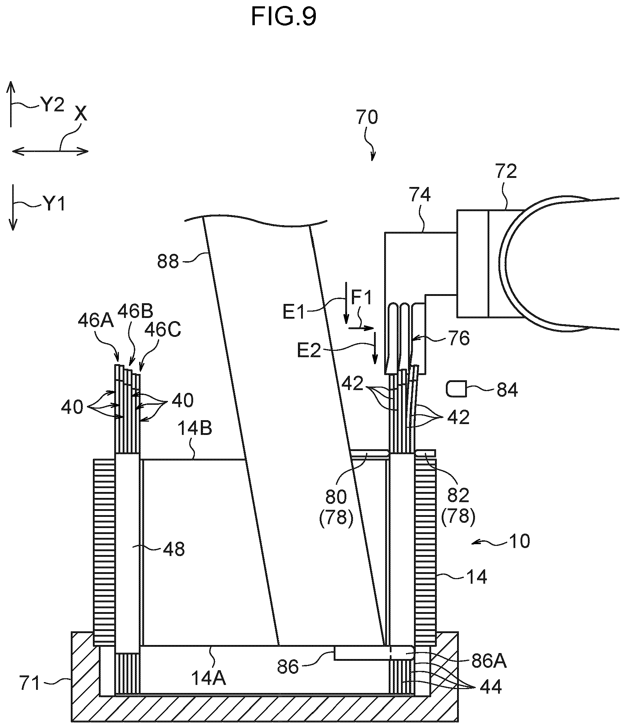

Next, as illustrated in Fig. 9, the tool 74 is moved in the axial direction and the radial direction by the robot manipulator 72 (refer to arrow E1, arrow F1 and arrow E2 in Fig. 9), and the distal ends of the comb teeth 76 of the tool 74 are inserted between the final ends of the leg portions 42 of the respective layers 46A, 46B, 46C. Specifically, the distal end of the tooth 76B of the comb teeth 76 is inserted between the layer 46A and the layer 46B, and the distal end of the tooth 76C of the comb teeth 76 is inserted between the layer 46B and the layer 46C.

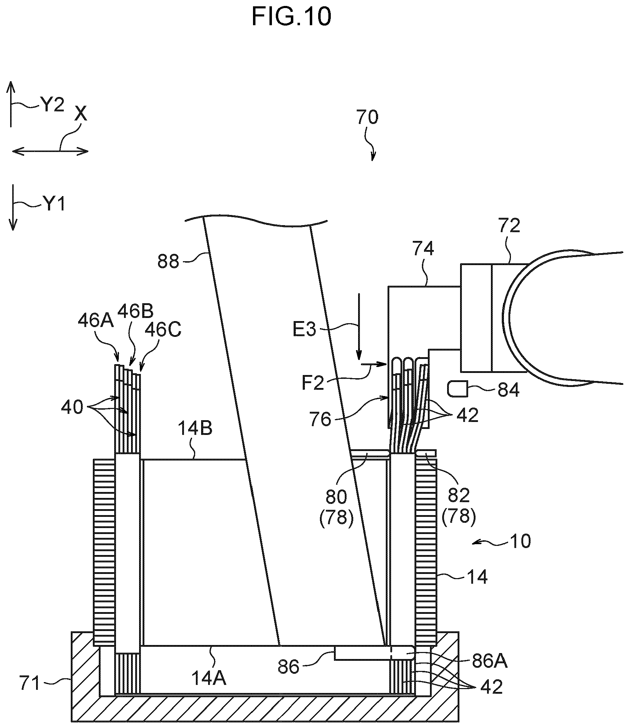

Next, as illustrated in Fig. 10, the tool 74 is moved in the axial direction and the radial direction by the robot manipulator 72 (refer to arrow E3 and arrow F2 in Fig. 10), and the teeth 76B, 76C of the comb teeth 76 are inserted between the final ends of the leg portions 42 of the respective layers 46A, 46B, 46C. The final ends of the leg portions 42 of the layers 46A, 46B are thereby bent in predetermined shapes (substantial crank shapes).

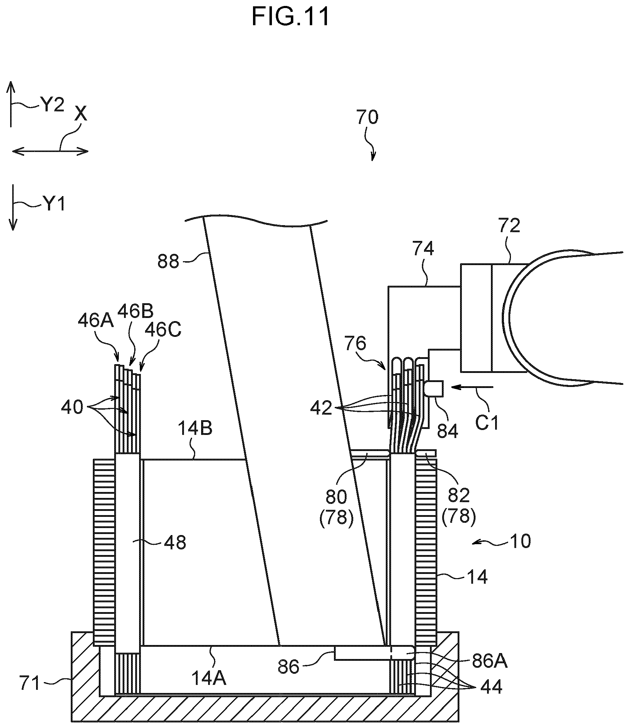

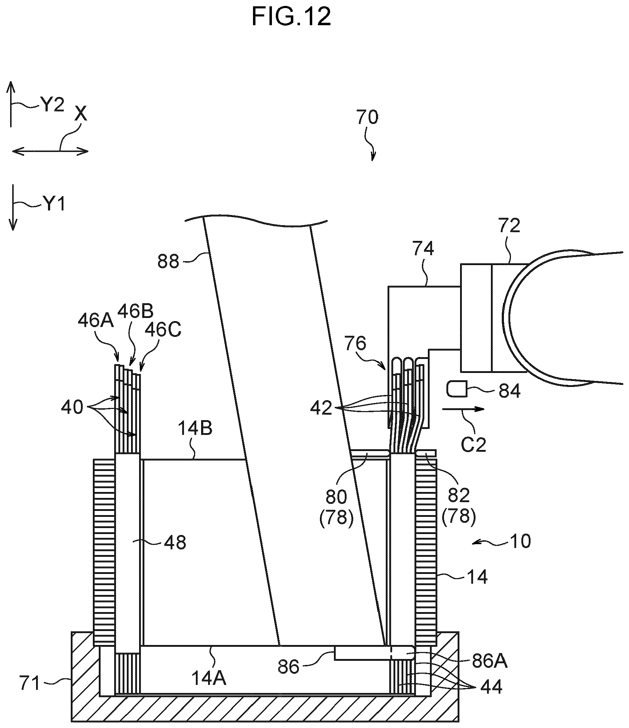

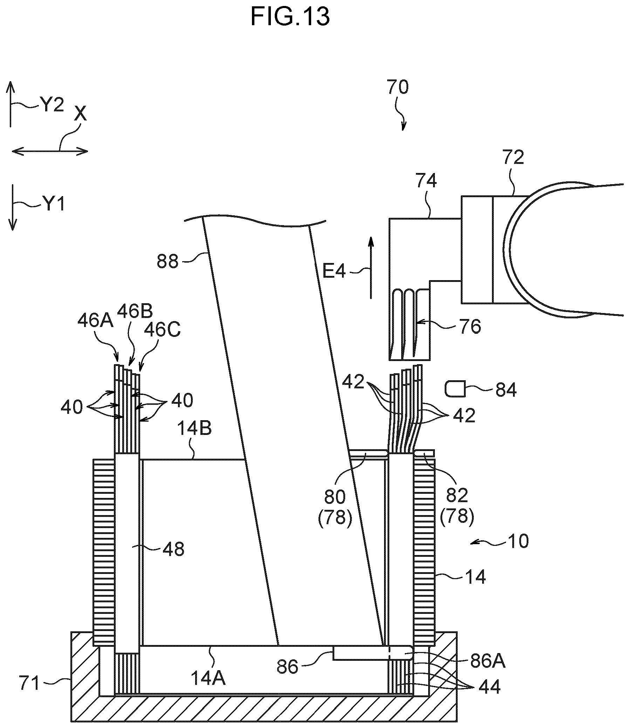

Next, as illustrated in Fig. 11, the pusher 84 is moved toward the radial direction inner side (refer to arrow C1 in Fig. 11). Due to this pusher 84, the final ends of the leg portions 42 of the layer 46C at the outer side are pushed toward the radial direction inner side, and are bent in shapes (substantial crank shapes) that are similar to the final ends of the leg portions 42 of the layers 46A, 46B. Next, as illustrated in Fig. 12, the pusher 84 is moved toward the radial direction outer side (refer to arrow C2 in Fig. 12), and is moved away from the final ends of the leg portions 42 of the layer 46C at the outer side. Next, as illustrated in Fig. 13, the tool 74 is moved toward the axial direction another side (the upper side) by the robot manipulator 72 (refer to arrow E4 in Fig. 13), and the comb teeth 76 are pulled-out from between the final ends of the leg portions 42 of the respective layers 46A, 46B, 46C. The interlayer interval widening step is thereby completed.

Note that, as an example, the present embodiment is structured such that the process of widening the intervals between the layers is carried out per one slot 16, but the present disclosure is not limited to this. The process of widening the intervals between the layers may be carried out per plural slots 16 by providing a plurality of the structural members of the interlayer interval widening device 70 such as the robot manipulator 72 and the like. In this case, a number of the restraining jigs 86, which number corresponds to the number of the slots 16 at which the interlayer interval widening process is carried out, is provided.

### (Summary of Embodiment)

In the method of manufacturing a stator relating to the present embodiment, there is manufactured the stator 10 that has the stator core 14 in which the plural slots 16 are formed, and the plural segment coils 40 whose both leg portions 42A, 42B are inserted in the respective slots 16 of the stator core 14 and that are superposed in the plural layers 46A, 46B, 46C in the radial direction of the stator core 14 and are arrayed in annular forms. In this manufacturing method, the both leg portions 42A, 42B of the plural segment coils 40 are respectively inserted into the respective slots 16 of the stator core 14 from the axial direction one side of the stator core 14. The amounts of projection of the final ends of the leg portions 42 from the end surface 14A at the axial direction another side of the stator core 14 are set so as to become longer in a stepwise manner from the layer 46A at the inner side toward the layer 46C at the outer side of the above-described plural layers 46A, 46B, 46C. The roots of the portions, which project-out from the end surface 14A, of the final ends of the leg portions 42A of the respective layers 46A, 46B, 46C are nipped in the radial direction of the core by the clamp 78.

Then, the tool 74 that has the comb teeth 76 is moved by the robot manipulator 72, and the comb teeth 76 are inserted between the final ends of the leg portions 42 of the respective layers 46A, 46B, 46C. Due thereto, the final ends that are engaged with the comb teeth 76 are bent in substantial crank shapes. Before the above-described inserting of the comb teeth 76 in between the final ends, the restraining jig 86 is inserted between the bent portions 44 of the segment coils 40 of the respective layers 46A, 46B, 46C and the end surface 14A at the axial direction one side of the stator core 14. Due to this restraining jig 86 abutting the bent portions 44 of the respective layers 46A, 46B, 46C from the axial direction another side of the stator core 14, movement of the segment coils 40 in the axial direction of the stator core 14 is restricted. Due thereto, at the time when the final ends of the leg portions 42 of the segment coils 40 are bent, positional offset of the segment coils 40 in the axial direction of the stator core 14 can be suppressed effectively.

Further, in the present embodiment, the two restraining portions 86A that are lined-up in the peripheral direction of the stator core 14 are provided at the restraining jig 86. The one restraining portion 86A abuts, from the axial direction another side of the stator core 14, the bent portions 44 of the segment coils 40 whose leg portions 42A at the one side in the peripheral direction are inserted between the two restraining portions 86A. The other restraining portion 86A abuts, from the axial direction another side of the stator core 14, the bent portions 44 of the segment coils 40 whose leg portions 42B at the another side in the peripheral direction are inserted between the two restraining portions 86A. In this way, because the two restraining portions 86A are provided at the one restraining jig 86, the structure can be simplified as compared with a case in which the two restraining portions 86A are provided at separate restraining jigs 86.

Further, in the present embodiment, before the comb teeth 76 of the tool 74 are inserted between the final ends of the leg portions 42 of the respective layers 46A, 46B, 46C, the roots of the portions, which project out from the end surface 14B at the axial direction another side of the stator core 14, of the final ends of the respective layers 46A, 46B, 46C are nipped in the radial direction of the stator core 14 by the clamp 78. Due thereto, at the time when the final ends of the leg portions 42 are bent, the effect of suppressing positional offset of the segment coils 40 in the axial direction of the stator core 14 can be improved.

Note that the above embodiment is structured such that the two restraining portions 86A are provided at the one restraining jig 86, but the present disclosure is not limited to this, and may be structured such that the two restraining portions 86A are provided at separate restraining jigs 86.

Further, the above embodiment describes a case in which a stator is manufactured, but the present disclosure can be applied also to manufacture of a rotor.

In addition, the present disclosure can be implemented by being modified in various ways within the scope of the invention which is defined by the appended claims.

## Claims

1. A method of manufacturing an armature (10) having a core (14) in which a plurality of slots (16) are formed, and a plurality of segment coils (40) having both leg portions (42A, 42B) inserted in respective slots of the core and that are superposed in a plurality of layers (46A, 46B, 46C) in a radial direction of the core and are arrayed in annular forms, the method comprising:
inserting the both leg portions of each of the plurality of segment coils into the respective slots of the core from an axial direction one side of the core;
moving a tool (74) that has at least one tooth (76) by a robot manipulator (72) in the radial direction and the axial direction, and inserting the at least one tooth between final ends of the leg portions of the respective layers; **characterized in that** the method further comprises :
before inserting the at least one tooth between the final ends, inserting a restraining jig (86) between bent portions (44) of the segment coils of the respective layers and an end surface (14A) at the axial direction one side of the core.

2. The method of manufacturing an armature of Claim 1, wherein two restraining portions (86A) that are lined-up in a peripheral direction of the core are provided at the restraining jig, one of the restraining portions is made to abut, from an axial direction other side, the bent portions of the segment coils whose leg portions at one side in the peripheral direction are inserted between the two restraining portions, and another of the restraining portions is made to abut, from the axial direction other side, the bent portions of the segment coils whose leg portions at another side in the peripheral direction are inserted between the two restraining portions.

3. The method of manufacturing an armature of Claim 1 or Claim 2, wherein, before the at least one tooth is inserted between the final ends, roots of portions, which project out from an end surface (14B) at an axial direction other side, of the final ends of the respective layers are nipped by a clamp (78) in the radial direction.

## Patentansprüche

1. Verfahren zur Herstellung eines Ankers (10) mit einem Kern (14), in dem eine Vielzahl von Nuten (16) ausgebildet ist, und einer Vielzahl von Segmentspulen (40), die beide Schenkelabschnitte (42A, 42B) aufweisen, die in jeweilige Nuten des Kerns eingesetzt sind und die in einer Vielzahl von Schichten (46A, 46B, 46C) in einer radialen Richtung des Kerns übereinander angeordnet sind und in ringförmigen Formen angeordnet sind, das Verfahren umfassend:
Einsetzen der beiden Schenkelabschnitte jeder der Vielzahl von Segmentspulen in die jeweiligen Nuten des Kerns von einer Axialrichtung einer Seite des Kerns;
Bewegen eines Werkzeugs (74), das mindestens einen Zahn (76) aufweist, durch einen Robotermanipulator (72) in der radialen Richtung und der axialen Richtung, und Einführen des mindestens einen Zahns zwischen äußeren Enden der Schenkelabschnitte der jeweiligen Schichten; **dadurch gekennzeichnet, dass** das Verfahren ferner umfasst:
vor dem Einsetzen des mindestens einen Zahns zwischen die äußeren Enden, Einsetzen einer Rückhaltevorrichtung (86) zwischen gebogene Abschnitte (44) der Segmentspulen der jeweiligen Schichten und eine Endoberfläche (14A) an der Axialrichtungsseite des Kerns.

2. Verfahren zur Herstellung eines Ankers nach Anspruch 1, wobei zwei Rückhalteabschnitte (86A), die in einer Umfangsrichtung des Kerns aufgereiht sind, an der Rückhaltevorrichtung bereitgestellt sind, wobei einer der Rückhalteabschnitte dazu gebracht wird, von einer anderen Axialrichtungsseite an den gebogenen Abschnitten der Segmentspulen anzuliegen, deren Schenkelabschnitte an einer Seite in der Umfangsrichtung zwischen den zwei Rückhalteabschnitten eingefügt sind, und wobei ein weiterer der Rückhalteabschnitte dazu gebracht wird, von der anderen Axialrichtungsseite an den gebogenen Abschnitten der Segmentspulen anzuliegen, deren Schenkelabschnitte an einer anderen Seite in der Umfangsrichtung zwischen den zwei Rückhalteabschnitten eingefügt sind.

3. Verfahren zur Herstellung eines Ankers nach Anspruch 1 oder Anspruch 2, wobei, bevor der mindestens eine Zahn zwischen die äußeren Enden eingesetzt wird, Wurzeln von Abschnitten, die aus einer Endoberfläche (14B) an einer anderen Axialrichtungsseite herausragen, der äußeren Enden der jeweiligen Schichten durch einen Bügel (78) in der radialen Richtung geklemmt werden.

## Revendications

1. Procédé de fabrication d'une armature (10) ayant un noyau (14) dans lequel une pluralité de fentes (16) sont formées, et une pluralité de bobines de segment (40) ayant les deux parties patte (42A, 42B) insérées dans des fentes respectives du noyau et qui sont superposées dans une pluralité de couches (46A, 46B, 46C) dans une direction radiale du noyau et sont disposées en formes annulaires, le procédé comprenant :
l'insertion des deux parties patte de chacune de la pluralité de bobines de segment dans les fentes respectives du noyau à partir d'une direction axiale d'un côté du noyau ;
le déplacement d'un outil (74) qui a au moins une dent (76) par un manipulateur de robot (72) dans la direction radiale et la direction axiale, et l'insertion de l'au moins une dent entre des extrémités finales des parties patte des couches respectives ; et **caractérisé en ce que** le procédé comprend en outre :
avant l'insertion de l'au moins une dent entre les extrémités finales, l'insertion d'un gabarit de retenue (86) entre des parties pliées (44) des bobines de segment des couches respectives et une surface d'extrémité (14A) au niveau de la direction axiale d'un côté du noyau.

2. Procédé de fabrication d'une armature selon la revendication 1, dans lequel deux parties de retenue (86A) qui sont alignées dans une direction périphérique du noyau sont fournies au niveau du gabarit de retenue, l'une des parties de retenue est amenée à venir en butée, depuis l'autre côté de direction axiale, avec les parties pliées des bobines de segment dont les parties patte au niveau d'un côté dans la direction périphérique sont insérées entre les deux parties de retenue, et une autre des parties de retenue est amenée à venir en butée, depuis l'autre côté de direction axiale, avec les parties pliées des bobines de segment dont les parties patte au niveau d'un autre côté dans la direction périphérique sont insérées entre les deux parties de retenue.

3. Procédé de fabrication d'une armature selon la revendication 1 ou la revendication 2, dans lequel, avant que l'au moins une dent ne soit insérée entre les extrémités finales, des racines de parties, qui font saillie à partir d'une surface d'extrémité (14B) au niveau d'un autre côté de direction axiale, des extrémités finales des couches respectives sont pincées par une pince (78) dans la direction radiale.
